# EUROPÄISCHE PATENTSCHRIFT

(11) **EP 0 688 623 B1**
(45) Veröffentlichungstag und Bekanntmachung des Hinweises auf die Patenterteilung: **05.01.2000**
(21) Anmeldenummer: 95109804.5
(22) Anmeldetag: 23.06.1995
(51) Int. Cl.: B23F 21/03, B24B 33/08, B24D 18/00

(54) **Honschleifwerkzeug für Präzisionszahnräder**
Honing tool for precision gear wheels
Outil de rodage pour engrenages de précision

(30) Priorität: 24.06.1994 DE 9410222 U
(43) Veröffentlichungstag der Anmeldung: 27.12.1995
(73) Patentinhaber: TYROLIT REINEKE Advanced Systems GmbH & Co. KG, 58791 Werdohl (DE)
(72) Erfinder: Heinrich, Horst, D-58809 Neuenrade (DE); Reineke, Horst, D-58791 Werdohl (DE)
(74) Vertreter: Grundmann, Dirk, Dr.

(56) Entgegenhaltungen:
- EP-A- 0 411 253
- FR-A- 2 217 115
- US-A- 4 008 055
- US-A- 4 077 164
- US-A- 4 354 328
- US-A- 4 826 509
- MACHINES AND TOOLING (STANKI I INSTRUMENTY), Bd. 42, Nr. 7, 1971 MELTON MOWBRAY GB, Seiten 30-32, M.Z. MIL'SHTEIN ET AL. 'Diamond honing of gears.'
- PATENT ABSTRACTS OF JAPAN vol. 016 no. 519 (M-1330) ,26.Oktober 1992 & JP-A-04 193415 (ASANO HAGURUMA KOUSAKUSHIYO:KK) 13.Juli 1992,

## Beschreibung

Die Erfindung betrifft ein Honschleifwerkzeug für Präzisionszahnräder und -schnecken, insbesondere für schrägverzahnte Zahnräder, bestehend aus einem zahnradförmigen Grundkörper, dessen Zähne mit in einem Nickelüberzug eingefaßten Schleifkörpern, insbesondere aus Diamant oder Bornitrit, versehen sind.

Durch Honen, ein Verfahren zur spanabhebenden Feinstbearbeitung, werden hinsichtlich Maß- und Formgenauigkeit sowie Oberflächengüte auch an sehr harten Werkstücken, z.B. aus Bronze, gehärteten Stählen oder Sintermetallen, hervorragende Ergebnisse erzielt. Zahnradgetriebe, die unter Verwendung gehonter Zahnräder aufgebaut sind, zeichnen sich u.a. durch einen sehr geräuscharmen Lauf aus, weshalb insbesondere bei der Kraftfahrzeugherstellung zunehmend gehonte Zahnräder verwendet werden. Das Honen wird im Falle außen verzahnter Zahnräder mittels innen verzahnter Honringe und in Falle innen verzahnter Zahnräder mittels außen verzahnter Honräder ausgeführt.

Es ist bekannt, Honwerkzeuge ähnlich wie Schleifkörper aus einem keramischen oder kunstharzgebundenen Material mit eingebetteten Schleifkörnern, z.B. aus Corund- oder Silicium-Karbit, herzustellen. Derartige Honwerkzeuge erfahren aber beim Honen eine verhältnismäßig rasche Abnutzung und sind nur für sogenanntes Normhonen einsetzbar, bei dem ein Abtrag bis zu einem Hundertstel Millimeter am Werkstück auszuführen ist.

Es sind ferner Abrichträder für Honwerkzeuge bekannt, die aus einem zahnradförmigen Grundkörper aus Stahl bestehen, dessen Zähne mit einem galvanisch aufgetragenen Nickelüberzug versehen sind, in dem besonders harte Schleifkörner, beispielsweise aus Diamant oder Bornitrit, eingefaßt sind. Bei derartigen Abrichträdern ist aber die Herstellung des aus Stahl bestehenden Grundkörpers außerordentlich teuer, da die Verzahnung mit höchster Präzision am Grundkörper geschliffen werden muß.

Der Erfindung liegt die Aufgabe zugrunde, ein Honwerkzeug zu schaffen, das eine hohe Standzeit aufweist, das auch zum sogenannten Leistungshonen, d.h. für einen Abtrag bis zu einem Zehntel Millimeter, einsetzbar ist und das mit wesentlich geringeren Kosten als Abrichträder aus Stahl herstellbar ist.

Ausgehend von einem Honwerkzeug der eingangs genannten Art, ist zur Lösung dieser Aufgabe erfindungsgemäß vorgesehen, daß der zahnradförmige Grundkörper aus einem keramischen oder kunstharzgebundenen porösen Material besteht, auf das der die Schleifkörner tragende Nickelüberzug in die Poren des Grundkörpers eindringend unmittelbar aufgebracht ist.

Ein solcher Grundkörper läßt sich in preiswerter Weise, beispielsweise als gepreßter und gesinterter Keramikring herstellen, in den die Verzahnung eingeschliffen wird. Der Grundkörper kann auch bereits in annähernd seiner Endform beim Pressen und Sintern hergestellt und dann auf die verlangte Präzision nachgeschliffen werden. Da der Grundkörper selbst nicht aus einem Schleifkörpermaterial bestehen muß, kann er verhältnismäßig weich sein bzw. weiche Zuschlagstoffe aufweisen, so daß die Schleifarbeiten keine nennenswerten Probleme und Kosten verursachen.

Überraschenderweise wurde festgestellt, daß ein auf einem derartigen Grundkörper aufgebrachter Nickelüberzug, der wie bei der Kunststoffvernickelung unter Anwendung auch von chemischen Nickelbädern hergestellt wird, vergleichbar fest haftet wie ein auf einem Stahlgrundkörper aufgebrachter galvanischer Nickelüberzug, wobei bei der Vernickelung nur unwesentlich höhere Kosten als bei einer rein galvanischen Vernickelung von Stahlgrundkörpern anfallen, so daß in der Gesamtbilanz das Honschleifwerkzeug nach der Erfindung relativ preiswert herstellbar ist.

In Ausgestaltung der Erfindung kann vorgesehen werden, daß der Grundkörper ringsum mit einem Nickelüberzug versehen ist, wobei vorteilhafterweise die Zähne des Grundkörpers an ihren Stirnseiten mit Riefen versehen sind, die zum größten Teil oder vollständig mit dem Nickelüberzug gefüllt sind. Wie praktische Erprobungen gezeigt haben, wird hierdurch ein besonders sicherer Halt des Nickelüberzuges am keramischen oder kunstharzgebundenen Grundkörper erreicht.

Gemäß einer bevorzugten Ausführungsform der Erfindung sind die Schleifkörner jeweils zu etwa 70 % ihrer Größe in Nickelüberzug eingefaßt, wobei der Nickelüberzug im Bereich der Stirnseiten und der Rückseite des zahnradförmigen Grundkörpers frei von Schleifkörnern ist.

Der Gegenstand der Erfindung wird im folgenden anhand eines in Zeichnung dargestellten Ausführungsbeispieles näher beschrieben. In der Zeichnung zeigen:
- Fig. 1 und 2: in perspektivischer Ansicht ein innen verzahntes und ein außen verzahntes Honschleifwerkzeug nach der Erfindung,
- Fig. 3: einen Querschnitt durch das innen verzahnte Honschleifwerkzeug nach Fig. 1, wobei der Schnitt längs einer Zahnspitze gelegt ist, und
- Fig. 4: zwei Zähne des Honschleifwerkzeuges im Querschnitt.

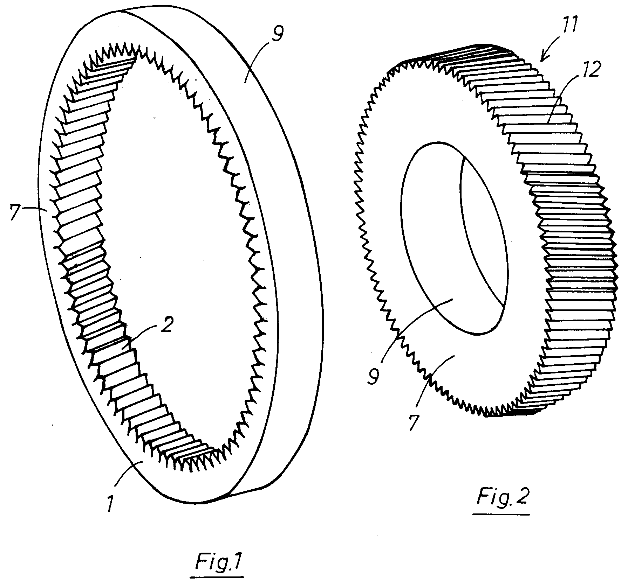

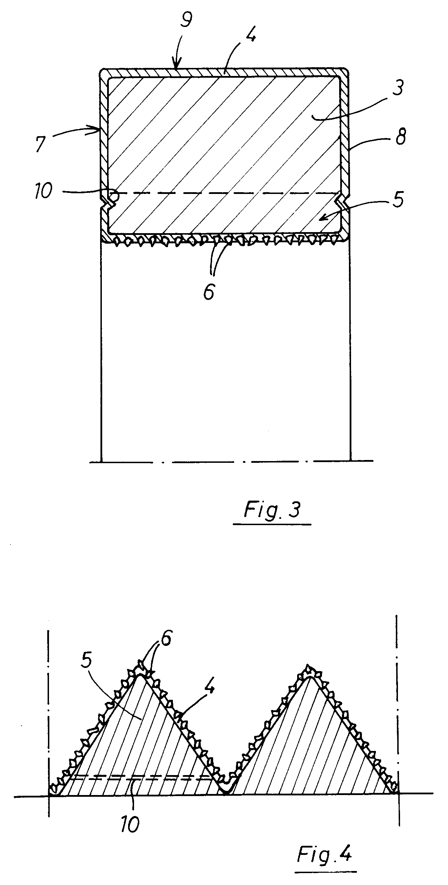

Das Honschleifwerkzeug 1 nach Fig. 1 besitzt die Form eines mit einer schrägen Innenverzahnung 2 versehenen Ringes und besteht aus einem verzahnten Grundkörper 3 aus keramischem oder kunstharzgebundenem Material, beispielsweise aus einem gepreßten und gesinterten Keramikring. Der Grundkörper 3 ist ringsum mit einem Nickelüberzug 4 versehen, vgl. auch Fig. 3 und 4. Im Bereich der Zähne 5 sind in dem Nickelüberzug 4 Schleifkörner 6 aus Diamant, Bornitrit oder ähnlich harten Stoffen eingefaßt, während der Nickelüberzug 4 im Bereich der Stirnseiten 7, 8 und der Rückseite 9 des Grundkörpers 3 frei von Schleifkörnern ist. Die Schleifkörner 6 sind im Mittel etwa jeweils zu 70 % ihrer Größe im Nickelüberzug 4 eingebettet, so daß sie sicher im Nickelüberzug gehalten sind.

Zur Erhöhung der Haftfestigkeit des Nickelüberzuges 4 am Grundkörper 3 sind die Zähne 5 des Grundkörpers an ihren Stirnseiten mit Riefen 10 versehen, die vom Nickelüberzug 4 ausgefüllt sind.

Das Honwerkzeug 11 nach Figur 2 ist in gleicher Weise aufgebaut wie das Honwerkzeug nach Figur 1, lediglich mit dem Unterschied, daß dieses eine Außenverzahnung 12 aufweist.

Die Honschleifwerkzeuge können im positiven Verfahren, bei dem die Schleifkörner unmittelbar auf dem Grundkörper aufgebracht werden, als auch im negativen Verfahren hergestellt werden, bei dem die Schleifkörner unter Zuhilfenahme einer die Belagoberfläche exakt festlegenden Negativform aufgebracht werden.

Die Dicke des Nickelüberzuges 4 beträgt wenige, bevorzugt 5 Mikrometer. Zur Folge der starken Zerklüftung des Grundkörpers 3 ergibt sich beim Überziehen des Grundkörpers 3 eine optimale Verhaftung/Verklammerung des Nickelüberzuges 5 mit den Poren der Grundkörperoberfläche, da das Nickelmaterial in die Poren eindringt und sich dort verklammert. Wegen der geringen Schichtdicke des Nickelüberzuges ist auch die Nickeloberfläche entsprechend zerklüftet, so daß sich ein optimaler Halt für die Schleifkörper 6 ausbildet. Die Schleifkörper 6 sind nur zum Teil eingebettet in die Nickelschicht und ragen mit ihren wirksamen Abschnitten aus der Nickelschicht heraus.

### Bezugszeichenliste

- 1: Honschleifwerkzeug
- 2: Innenverzahnung
- 3: verzahnter Grundkörper
- 4: Nickelüberzug
- 5: Zähne
- 6: Schleifkörner
- 7: Stirnseiten
- 8: Stirnseiten
- 9: Rückseite
- 10: Riefen
- 11: Honwerkzeug
- 12: Außenverzahnung

## Patentansprüche

1. Honschleifwerkzeug für Präzisionszahnräder und -schnecken, insbesondere für schrägverzahnte Zahnräder, bestehend aus einem zahnradförmigen Grundkörper, dessen Zähne mit in einem Nickelüberzug eingefaßten Schleifkörpern, insbesondere aus Diamant der Bornitrit, versehen sind, dadurch gekennzeichnet, daß der zahnradförmige Grundkörper (3) aus einem keramischen der kunstharzgebundenen porösen Material besteht, auf des der die Schleifkörner (6) tragende Nickelüberzug (4) in die Poren des Grundkörpers eindringend unmittelbar aufgebracht ist.

2. Honschleifwerkzeug nach Anspruch 1, dadurch gekennzeichnet, daß der Grundkörper (3) ringsum mit dem Nickelüberzug (4) versehen ist.

3. Honschleifwerkzeug nach einem der vorhergehenden Ansprüche, dadurch gekennzeichnet, daß die Zähne (5) des Grundkörpers (3) an ihren Stirnseiten mit Riefen (10) versehen sind, die zum größten Teil oder vollständig mit dem Nickelüberzug (4) gefüllt sind.

4. Honschleifwerkzeug nach einem der vorhergehenden Ansprüche, dadurch gekennzeichnet, daß die Schleifkörner (6) jeweils zu etwa 70 % ihrer Größe im Nickelüberzug (4) eingefaßt sind.

5. Honschleifwerkzeug nach einem der vorhergehenden Ansprüche, dadurch gekennzeichnet, daß der Nickelüberzug (4) im Bereich der Stirnseiten (7, 8) und der Rückseite (9) des zahnradförmigen Grundkörpers (3) frei von Schleifkörnern (6) ist.

## Claims

1. Honing tool for precision gears and worms, in particular for helical gears, consisting of a gear-like main body whose teeth are provided with abrasive bodies, particularly made of diamond or boron nitrite, set in a nickel coating, characterised in that the gear-like main body (3) is made of a ceramic or synthetic resin-bonded porous material to which the nickel coating (4) carrying the abrasive particles (6) is applied directly, penetrating the pores of the main body.

2. Honing tool according to claim 1, characterised in that the main body (3) is provided with the nickel coating (4) all round.

3. Honing tool according to any of the preceding claims, characterised in that the teeth (5) of the main body (3) are provided on their faces with grooves (10) which are mostly or completely filled with the nickel coating (4).

4. Honing tool according to any of the preceding claims, characterised in that the abrasive particles (6) are in each case set approximately 70% of their size in the nickel coating (4).

5. Honing tool according to any of the preceding claims, characterised in that the nickel coating (4) is free from abrasive particles (6) in the region of the faces (7, 8) and the rear side (9) of the gear-like main body (3).

## Revendications

1. Outil de meulage de rodage pour des roues dentées et des vis de précision, en particulier pour des roues dentées à denture oblique, constitué d'un corps de base en forme de roue dentée, dont les dents sont dotées de corps abrasifs, en particulier en diamant ou en nitrure de bore, enchâssés dans un revêtement en nickel, caractérisé en ce que le corps de base (3) en forme de roue dentée est constitué d'un matériau poreux, céramique ou lié par de la résine synthétique, matériau sur lequel est appliqué directement le revêtement en nickel (4) portant les grains abrasifs (6) en pénétrant dans les pores du corps de base.

2. Outil de meulage de rodage selon la revendication 1, caractérisé en ce que le corps de base (3) est doté, sur son pourtour, du revêtement en nickel (4).

3. Outil de meulage de rodage selon l'une des revendications précédentes, caractérisé en ce que les dents (5) du corps de base (3) sont dotées, sur leurs faces frontales, de stries (10) remplies pour la majeure partie ou complètement par le revêtement de nickel (4).

4. Outil de meulage de rodage selon l'une des revendications précédentes, caractérisé en ce que les grains abrasifs (6) sont chacun enchâssés dans le revêtement nickel (4) jusqu'à environ 70 % de leur taille.

5. Outil de meulage de rodage selon l'une des revendications précédentes, caractérisé en ce que le revêtement en nickel (4) est exempt de grains abrasifs (6) dans la zone des faces frontales (7, 8) et de la face arrière (9) du corps de base (3) en forme de roue dentée.
